# EUROPEAN PATENT SPECIFICATION

(11) **EP 2 807 040 B1**
(45) Date of publication and mention of the grant of the patent: **29.06.2016**
(21) Application number: 13713503.4
(22) Date of filing: 25.01.2013
(51) Int. Cl.: B60C 1/00, C08K 5/44, C08L 7/00, C08L 9/00, C08L 21/00, C08K 5/00, C08K 9/04

(54) **RUBBER TYRE COMPOUND WITH IMPROVED CRACK PROPAGATION RESISTANCE**
GUMMIREIFENVERBUND MIT VERBESSERTER RISSAUSBREITUNGSBESTÄNDIGKEIT
COMPOSÉ DE CAOUTCHOUC POUR PNEUMATIQUE AVEC UNE RÉSISTANCE AMÉLIORÉE À LA PROPAGATION DE FISSURES

(30) Priority: 25.01.2012 IT TO20120064
(43) Date of publication of application: 03.12.2014
(73) Proprietor: Bridgestone Corporation, Tokyo 104-8340 (JP)
(72) Inventor: BOTTI, Francesco, 00154 Roma (IT); BARBAGLIA, Guido, 21013 Gallarate (IT); PERTUSIO, Giavanni Alessandro, 00146 Roma (IT)
(74) Representative: Marchetti, Alessio
(86) International application number: PCT/IB2013/050674
(87) International publication number: WO 2013/111115

(56) References cited:
- EP-A1- 0 832 920
- WO-A1-2011/048034
- US-A1- 2002 082 364
- US-A1- 2011 294 936
- Rhein Chemie: "Rhenogran ADT-50 Technical Data Sheet", , 1 October 2008 (2008-10-01), pages 1-2, XP055018657, Retrieved from the Internet: URL:http://webshop.rheinchemie.com/downloa d/EN_Rhenogran_ADT-50.pdf?XTCsid=cn6jqsbgc j96bvuimtuppv3tb4 [retrieved on 2012-02-07]

## Description

### TECHNICAL FIELD

The present invention relates to a rubber tyre compound with improved crack propagation resistance.

### BACKGROUND ART

An essential characteristic of rubber tyre compounds, to ensure long working life of the tyre, is good fatigue resistance. Fatigue resistance is the resistance to failure of a material subjected to periodic stress, and is normally measured in the number of cycles required for an object to fracture.

Crack formation and propagation of a cured rubber compound are one of the main parameters of its fatigue resistance. So, obviously, effectively improving resistance to crack propagation also prolongs the working life of the tyre.

Common practices, to improve crack propagation resistance, are to use natural as opposed to synthetic rubber; a larger quantity of reinforcing filler, such as carbon black; and a larger content of silica not bonded to
the polymer base.

These solutions, while improving crack propagation resistance, may conflict with other characteristics demanded of the compound, such as low rolling resistance. Moreover, demand exists for a more marked improvement in crack propagation resistance than is achievable using the above solutions.

### DISCLOSURE OF INVENTION

It is an object of the present invention to provide a solution to improving crack propagation resistance without also impairing other characteristics of the compound, such as rolling resistance.

For a clearer understanding of the problem the present invention is designed to solve, it is important to bear in mind that a reduction in carbon black content, while improving rolling resistance, also impairs hardness and crack propagation resistance.

According to the present invention, there is provided a rubber tyre compound comprising at least a polymer base; a filler; and a curing system; said compound being characterized by comprising treated silica with an adsorbed curing activator; and said curing activator being in the group comprising sulphenamides, benzothiazoles, guanidines and thiurams.

Preferably, the compound comprises 2 to 15 phr of treated silica.

Preferably, the adsorbed curing activator of said treated silica equals 5-30% by weight of silica.

Preferably, the polymer base comprises 20 to 60 phr of a polymer compound of S-SBR containing 20-50% styrene and 30-70% vinyl, and comprises 10-90% of a first fraction with a mean molecular weight of 50-100x10³ and a molecular weight distribution of ≤1.5, and 10-90% of a second fraction with a mean molecular weight of 800-1500x10³ and a molecular weight distribution of ≤3.0.

Preferably, the polymer base comprises 20 to 60 phr of polybutadiene, of which preferably 5 to 50% of 1,2 syndiotactic microstructure; and 40 to 80 phr of natural rubber.

Preferably, the filler comprises 5 to 50 phr of carbon black and 5 to 50 phr of silica.

A further object of the present invention is a tyre comprising at least one portion made from a compound in accordance with the present invention.

A further object of the present invention is a method of producing rubber tyre compounds, the main characteristics of which method are indicated in Claim 9, and the preferred and/or auxiliary characteristics of which are indicated in Claims 10 to 15.

### BEST MODE FOR CARRYING OUT THE INVENTION

A number of non-limiting embodiments are described below by way of example, for a clearer understanding of the present invention.

Five control compounds (A-E) and seven compounds (F-L) according to the present invention were produced.

The compounds according to the present invention all contain the same amount of treated silica, on which a curing activator was adsorbed.

The treated silica was produced as described below.
- treated silica production procedure -
- the silica was dried in an oven at 150°C for 2 hours;
- a quantity of curing activator equal to 10% by weight of the silica was dissolved in cyclohexane at 50°C:
- the silica was added to the solution and stirred continuously for 1 hour at ambient temperature;
- the silica was allowed to settle, and was then separated from the solvent, washed once, and dried under a hood for 1 hour.

The treated silica used in compounds F-I according to the present invention was produced as described above.

All the compounds were produced as described below.

### - compound production procedure -

### (first mixing step)

Prior to mixing, a 230- to 270-litre tangential- rotor mixer was loaded with the polymer base and the ingredients in Tables I, II and III to a fill factor of 66-72%.

The mixer was operated at a speed of 40-60 rpm, and the resulting mixture was unloaded on reaching a temperature of 140-160°C.

### (second mixing step)

The mixture from the first step was mixed again in the mixer operated at a speed of 40-60 rpm, and was unloaded on reaching a temperature of 130-150°C

### (third mixing step)

The curing system, comprising sulphur and accelerants, and other ingredients shown in Tables I, II and III were added to the mixture from the second step to a fill factor of 63-67%.

The mixer was operated at a speed of 20-40 rpm, and the resulting mixture was unloaded on reaching a temperature of 100-110°C.

Table I shows the compositions in phr of the five control compounds, and the mixing steps in which the ingredients were added.

**TABLE I**

| | | A | B | C | D | E |
|---|---|---|---|---|---|---|
| 1^{st} MIXING STEP | NATURAL RUBBER | 50 | 50 | 50 | 50 | 50 |
| | 1,4 CIS POLYBUTADIENE | 50 | 50 | 50 | 50 | 50 |
| | TDAE | 10 | 10 | 10 | 10 | 10 |
| | CARBON BLACK | 60 | 40 | 40 | 40 | 10 |
| | SILICA | -- | -- | -- | -- | 30 |
| | SILANE BONDING AGENT | -- | -- | -- | -- | 3 |
| 3^{rd} MIXING STEP | TBBS | 1 | 1 | 1 | 2 | 1 |
| | SULPHUR | 1.9 | 1.9 | 1.9 | 1.9 | 1.9 |
| | SILICA | -- | -- | 9 | 9 | -- |

| | | | | | | |
|---|---|---|---|---|---|---|
| TDAE is a plasticizer in accordance with European Standard 2005/69/EEC governing tyre oil. TBBS (N-ter-butylbenzothiazolesulphenamide) is a curing accelerant. | | | | | | |

Table II shows the compositions in phr of the first four compositions according to the present invention, and the mixing steps at which the ingredients were added.

**TABLE II**

| | | F | G | H | I |
|---|---|---|---|---|---|
| 1^{st} MIXING STEP | NATURAL RUBBER | 50 | 50 | 50 | 50 |
| | 1,4 CIS POLYBUTADIENE | 50 | 25 | -- | -- |
| | S-SBR LMW | -- | 34 | 34 | 34 |
| | TDAE | 10 | -- | -- | -- |
| | VCR BR | -- | -- | 25 | 25 |
| | CARBON BLACK | 60 | 40 | 40 | 10 |
| | SILICA | -- | -- | -- | 30 |
| | SILANE BONDING AGENT | -- | -- | -- | 3 |
| 3^{rd} MIXING STEP | TBBS | 1 | 1 | 1 | 1 |
| | SULPHUR | 1.9 | 1.9 | 1.9 | 1.9 |
| | TREATED SILICA¹ | 10 | 10 | 10 | 10 |

| | | | | | |
|---|---|---|---|---|---|
| S-SBR LMW is a polymer compound of S-SBR containing 20-50% styrene and 30-70% vinyl, and comprises 10-90% (in this case, 27.3%) of a first fraction with a mean molecular weight of 50-100x10³ and a molecular weight distribution of ≤1.5, and 10-90% (in this case, 72.7%) of a second fraction with a mean molecular weight of 800-1500x10³ and a molecular weight distribution of ≤3.0. VCR BR is a polymer compound containing 5-50% of 1,2 syndiotactic polybutadiene in a 1,4 cis polybutadiene matrix. TREATED SILICA¹ is silica on which the TBBS (N-ter-butylbenzothiazolesulphenamide) curing activator has been adsorbed. | | | | | |

Table III shows the compositions in phr of the other three compounds (J, K, L) according to the present invention, and the mixing steps at which the ingredients were added. Compounds J, K and L have the same compositions as compound I in Table II.

**TABLE III**

| | | J | K | L |
|---|---|---|---|---|
| 1^{st} MIXING STEP | NATURAL RUBBER | 50 | | |
| | S-SBR LMW | 34 | | |
| | VCR BR | 25 | | |
| | CARBON BLACK | 10 | | |
| | SILICA | 30 | | |
| | SILANE BONDING AGENT | 3 | | |
| 3^{rd} MIXING STEP | TBBS | 1 | | |
| | SULPHUR | 1.9 | | |
| | TREATED SILICA² | 10 | -- | -- |
| | TREATED SILICA³ | -- | 10 | -- |
| | TREATED SILICA⁴ | -- | -- | 10 |

| | | | | |
|---|---|---|---|---|
| TREATED SILICA² is silica on which an MBTS (2,2'-DIBENZOTHIAZYL DISULPHIDE) curing activator has been adsorbed. TREATED SILICA³ is silica on which a DPG (DIPHENYL GUANIDINE) curing activator as been adsorbed. TREATED SILICA⁴ is silica on which a TBZTD (TETRABENZYLTHIURAMDISULPHIDE) curing activator as been adsorbed. | | | | |

The compounds so formed were tested for crack propagation resistance, tenacity, and rolling resistance.

More specifically, the rolling resistance values were calculated from Tanδ values measured as per ASTM Standard D5992; the tenacity test was conducted as per ISO Standard 37, using the stress-strain curve area and therefore the failure energy of the test piece as a representative tenacity value; and the crack propagation resistance test was conducted as per ISO Standard 27727.

Tables IV and V show the results of the above tests. The values are indexed with respect to those of control compound A (the higher the value, the better the performance).

**TABLE IV**

| | A | B | C | D | E |
|---|---|---|---|---|---|
| ROLLING RESISTANCE | 100 | 128 | 120 | 120 | 100 |
| TENACITY | 100 | 85 | 90 | 80 | 100 |
| CRACK PROPAGATION RESISTANCE | 100 | 85 | 90 | 80 | 80 |

**TABLE V**

| | F | G | H | I | J | K | L |
|---|---|---|---|---|---|---|---|
| ROLLING RESISTANCE | 120 | 105 | 96 | 100 | 100 | 100 | 100 |
| TENACITY | 90 | 115 | 125 | 125 | 125 | 130 | 120 |
| CRACK PROPAGATION RESISTANCE | 95 | 100 | 100 | 120 | 120 | 115 | 120 |

As shown by the results in Tables IV and V, the compounds according to the present invention give excellent crack propagation resistance values without compromising the rolling resistance values.

The above advantages are achieved using adsorbed curing activators in the group comprising sulphenamides, benzothiazoles, guanidines and thiurams. These curing activators have the ability to lower the resilience of rubber close to the silica particles on which they are adsorbed, thus improving crack propagation resistance.

Particularly noteworthy are compounds G-L containing both treated silica and the S-SBR LMW polymer base. These all give excellent results, especially compound I also comprising silica and the silane bonding agent.

An interesting point to note in Table IV is how the addition of untreated silica (compound C) or extra TBBS together with untreated silica (compound D) at the third mixing step does not have the same effects as when using treated silica. Which therefore confirms how the advantage achieved actually depends on employing silica with an adsorbed, as opposed to separate, curing activator.

## Claims

1. A rubber tyre compound comprising at least a polymer base; a filler; and a curing system; said compound being **characterized by** comprising treated silica with an adsorbed curing activator; and said curing activator being in the group comprising sulphenamides, benzothiazoles, guanidines and thiurams.

2. A rubber tyre compound as claimed in Claim 1, **characterized by** comprising 2 to 15 phr of treated silica.

3. A rubber tyre compound as claimed in Claim 2, **characterized in that** the adsorbed curing activator of said treated silica equals 5-30% by weight of silica.

4. A rubber tyre compound as claimed in Claim 3, **characterized in that** the polymer base comprises 20 to 60 phr of a polymer compound of S-SBR containing 20-50% styrene and 30-70% vinyl, and comprises 10-90% of a first fraction with a mean molecular weight of 50-100x10³ and a molecular weight distribution of ≤1.5, and 10-90% of a second fraction with a mean molecular weight of 800-1500x10³ and a molecular weight distribution of ≤3.0.

5. A rubber tyre compound as claimed in any one of the foregoing Claims, **characterized in that** the polymer base comprises 20 to 60 phr of polybutadiene and 40 to 80 phr of natural rubber.

6. A rubber tyre compound as claimed in Claim 5, **characterized in that** said polybutadiene comprises 5 to 50% of 1,2 syndiotactic microstructure.

7. A rubber tyre compound as claimed in Claim 5 or 6, **characterized in that** the filler comprises 5 to 50 phr of carbon black and/or 5 to 50 phr of silica.

8. A tyre comprising at least one portion made from a compound as claimed in the preceding claims.

9. A method of producing rubber tyre compounds, the method comprising a first mixing step, in which a polymer base is mixed with at least a filler; and a final mixing step, in which a curing system comprising at least sulphur and a curing activator is added and mixed to the mixture from said first mixing step; said method being **characterized in that** said curing activator is used in adsorbed form on silica, and is in the group comprising sulphenamides, benzothiazoles, guanidines and thiurams.

10. A method as claimed in Claim 9, **characterized in that** silica and a silane bonding agent are added and mixed to the polymer base at said first mixing step.

11. A method as claimed in Claim 9 or 10, **characterized in that** the quantity used of said silica on which the curing activator is adsorbed ranges between 2 and 15 phr of treated silica.

12. A method as claimed in Claim 11, **characterized in that** the adsorbed curing activator equals 5-30% by weight of silica.

13. A method as claimed in Claim 12, **characterized in that** the polymer base comprises 20 to 60 phr of a polymer compound of S-SBR containing 20-50% styrene and 30-70% vinyl, and comprises 10-90% of a first fraction with a mean molecular weight of 50-100x10³ and a molecular weight distribution of ≤1.5, and 10-90% of a second fraction with a mean molecular weight of 800-1500x10³ and a molecular weight distribution of ≤3.0.

14. A method as claimed in any one of Claims 9 to 13, **characterized in that** the polymer base comprises 20 to 60 phr of polybutadiene and 40 to 80 phr of natural rubber.

15. A method as claimed in Claim 14, **characterized in that** said polybutadiene comprises 5 to 50% of 1,2 syndiotactic microstructure.

## Patentansprüche

1. Kautschukzusammensetzung für Reifen, umfassend mindestens eine Polymerbasis; einen Füllstoff; und ein Vulkanisierungssystem; wobei die Zusammensetzung **dadurch gekennzeichnet ist, dass** sie behandelte Kieselerde mit einem adsorbierten Vulkanisierungsaktivator umfasst; und dass der Vulkanisierungsaktivator in der Gruppe umfassend Sulphenamide, Benzothiazole, Guanidine und Thiurame ist.

2. Kautschukzusammensetzung für Reifen nach Anspruch 1, **dadurch gekennzeichnet, dass** sie 2 bis 15 phr behandelter Kieselerde umfasst.

3. Kautschukzusammensetzung für Reifen nach Anspruch 2, **dadurch gekennzeichnet, dass** der adsorbierte Vulkanisierungsaktivator der behandelten Kieselerde 5-30 Gewichts-% Kieselerde entspricht.

4. Kautschukzusammensetzung für Reifen nach Anspruch 3, **dadurch gekennzeichnet, dass** die Polymerbasis 20 bis 60 phr einer Polymerzusammensetzung von S-SBR, enthaltend 20-50 % Styrol und 30-70 % Vinyl, umfasst, und 10-90 % einer ersten Fraktion mit einem mittleren Molekulargewicht von 50-100x10³ und einer Molekulargewichtsverteilung von ≤1,5, und 10-90 % einer zweiten Fraktion mit einem mittleren Molekulargewicht von 800-1500x10³ und einer Molekulargewichtsverteilung von ≤3,0 umfasst.

5. Kautschukzusammensetzung für Reifen nach einem der vorstehenden Ansprüche, **dadurch gekennzeichnet, dass** die Polymerbasis 20 bis 60 phr Polybutadien und 40 bis 80 phr Naturkautschuk umfasst.

6. Kautschukzusammensetzung für Reifen nach Anspruch 5, **dadurch gekennzeichnet, dass** das Polybutadien 5 bis 50 % 1,2-syndiotaktischer Mikrostruktur umfasst.

7. Kautschukzusammensetzung für Reifen nach Anspruch 5 oder 6, **dadurch gekennzeichnet, dass** der Füllstoff 5 bis 50 phr Ruß und/oder 5 bis 50 phr Kieselerde umfasst.

8. Reifen, umfassend mindestens einen aus einer Zusammensetzung nach einem der vorstehenden Ansprüche gefertigten Abschnitt.

9. Verfahren zum Herstellen von Kautschukzusammensetzungen für Reifen, wobei das Verfahren einen ersten Mischungsschritt, in welchem eine Polymerbasis mit mindestens einem Füllstoff gemischt wird; und einen finalen Mischungsschritt, in welchem ein Vulkanisierungssystem, umfassend mindestens Schwefel und einen Vulkanisierungsaktivator, der Mischung des ersten Mischungsschritts zugegeben und damit vermischt wird, umfasst; wobei das Verfahren **dadurch gekennzeichnet ist, dass** der Vulkanisierungsaktivator in auf Kieselerde adsorbierter Form verwendet wird, und in der Gruppe umfassend Sulphenamide, Benzothiazole, Guanidine und Thiurame ist.

10. Verfahren nach Anspruch 9, **dadurch gekennzeichnet, dass** beim ersten Mischungsschritt Kieselerde und ein Silanbindemittel zur Polymerbasis zugegeben und damit vermischt werden.

11. Verfahren nach Anspruch 9 oder 10, **dadurch gekennzeichnet, dass** die Menge der verwendeten Kieselerde, auf welcher der Vulkanisierungsaktivator adsorbiert wird, im Bereich zwischen 2 und 15 phr behandelter Kieselerde liegt.

12. Verfahren nach Anspruch 11, **dadurch gekennzeichnet, dass** der adsorbierte Vulkanisierungsaktivator 5-30 Gewichts-% Kieselerde entspricht.

13. Verfahren nach Anspruch 12, **dadurch gekennzeichnet, dass** die Polymerbasis 20 bis 60 phr einer Polymerzusammensetzung von S-SBR, enthaltend 20-50 % Styrol und 30-70 % Vinyl, umfasst, und 10-90 % einer ersten Fraktion mit einem mittleren Molekulargewicht von 50-100x10³ und einer Molekulargewichtsverteilung vorn ≤1,5, und 10-90 % einer zweiten Fraktion mit einem mittleren Molekulargewicht von 800-1500x10³ und einer Molekulargewichtsverteilung von ≤3,0 umfasst.

14. Verfahren nach einem der Ansprüche 9 bis 13, **dadurch gekennzeichnet, dass** die Polymerbasis 20 bis 60 phr Polybutadien und 40 bis 80 phr Naturkautschuk umfasst.

15. Verfahren nach Anspruch 14, **dadurch gekennzeichnet, dass** das Polybutadien 5 bis 50 % 1,2-syndiotaktischer Mikrostruktur umfasst.

## Revendications

1. Composé en caoutchouc pour pneumatique comprenant au moins une base polymère ; une charge ; et un système de vulcanisation ; ledit composé étant **caractérisé en ce qu'**il comprend de la silice traitée avec un activateur de vulcanisation adsorbé ; et ledit activateur de vulcanisation appartenant au groupe comprenant des sulfénamides, des benzothiazoles, des guanidines et des thiurames.

2. Composé en caoutchouc pour pneumatique selon la revendication 1, **caractérisé en ce qu'**il comprend 2 à 15 phr de silice traitée.

3. Composé en caoutchouc pour pneumatique selon la revendication 2, **caractérisé en ce que** l'activateur de vulcanisation adsorbé de ladite silice traitée équivaut à 5 à 30 % en poids de silice.

4. Composé en caoutchouc pour pneumatique selon la revendication 3, **caractérisé en ce que** la base polymère comprend 20 à 60 phr d'un composé polymère de S-SBR contenant 20 à 50 % de styrène et 30 à 70 % de vinyle et comprend 10 à 90 % d'une première fraction avec un poids moléculaire moyen de 50 à 100x10³ et une distribution des masses moléculaires ≤1,5 et 10 à 90 % d'une deuxième fraction avec un poids moléculaire moyen de 800 à 1500x10³ et une distribution des masses moléculaires ≤3,0.

5. Composé en caoutchouc pour pneumatique selon l'une quelconque des revendications précédentes, **caractérisé en ce que** la base polymère comprend 20 à 60 phr de polybutadiène et 40 à 80 phr de caoutchouc naturel.

6. Composé en caoutchouc pour pneumatique selon la revendication 5, **caractérisé en ce que** ledit polybutadiène comprend 5 à 50 % d'une microstructure 1,2-syndiotactique.

7. Composé en caoutchouc pour pneumatique selon la revendication 5 ou 6, **caractérisé en ce que** la charge comprend 5 à 50 phr de noir de carbone et/ou 5 à 50 phr de silice.

8. Pneumatique comprenant au moins une partie fabriquée à partir d'un composé selon les revendications précédentes.

9. Procédé de production de composés en caoutchouc pour pneumatique, le procédé comprenant une première étape de mélange, dans laquelle une base polymère est mélangée à au moins une charge ; et une étape de mélange final, dans laquelle un système de vulcanisation comprenant au moins du soufre et un activateur de vulcanisation est ajouté et mélangé au mélange provenant de ladite première étape de mélange ; ledit procédé étant **caractérisé en ce que** ledit activateur de vulcanisation est utilisé sous une forme adsorbée sur de la silice et appartient au groupe comprenant des sulfénamides, des benzothiazoles, des guanidines et des thiurames.

10. Procédé selon la revendication 9, **caractérisé en ce que** de la silice et un agent de liaison silane sont ajoutés et mélangés à la base polymère pendant ladite première étape de mélange.

11. Procédé selon la revendication 9 ou 10, **caractérisé en ce que** la quantité utilisée de ladite silice sur laquelle est adsorbé l'activateur de vulcanisation est comprise entre 2 et 15 phr de silice traitée.

12. Procédé selon la revendication 11, **caractérisé en ce que** l'activateur de vulcanisation adsorbé équivaut à 5 à 30 % en poids de silice.

13. Procédé selon la revendication 12, **caractérisé en ce que** la base polymère comprend 20 à 60 phr d'un composé polymère de S-SBR contenant 20 à 50 % de styrène et 30 à 70 % de vinyle et comprend 10 à 90 % d'une première fraction avec un poids moléculaire moyen de 50 à 100x10³ et une distribution des masses moléculaires ≤1,5 et 10 à 90 % d'une deuxième fraction avec un poids moléculaire moyen de 800 à 1500x10³ et une distribution des masses moléculaires ≤3,0.

14. Procédé selon l'une quelconque des revendications 9 à 13, **caractérisé en ce que** la base polymère comprend 20 à 60 phr de polybutadiène et 40 à 80 phr de caoutchouc naturel.

15. Procédé selon la revendication 14, **caractérisé en ce que** ledit polybutadiène comprend 5 à 50 % d'une microstructure 1,2-syndiotactique.
